# EUROPEAN PATENT SPECIFICATION

(11) **EP 3 633 851 B1**
(45) Date of publication and mention of the grant of the patent: **24.06.2026**
(21) Application number: 17911990.4
(22) Date of filing: 31.05.2017
(51) Int. Cl.: H02P 29/00, G01M 99/00, G05B 23/02, H02P 21/14, H02P 21/18, H02P 21/20, H02P 23/00

(54) **STATE MONITORING DEVICE AND DEVICE SYSTEM**
ZUSTANDSÜBERWACHUNGSVORRICHTUNG UND VORRICHTUNGSSYSTEM
DISPOSITIF DE SURVEILLANCE D'ÉTAT ET SYSTÈME DE DISPOSITIF

(43) Date of publication of application: 08.04.2020
(73) Proprietor: Hitachi, Ltd., Tokyo 100-8280 (JP)
(72) Inventor: NAKAMURA, Akihiro, Tokyo 100-8280 (JP); SUMITA, Satoshi, Tokyo 100-8280 (JP); IWAJI, Yoshitaka, Tokyo 100-8280 (JP); KANEKO, Satoru, Tokyo 100-8280 (JP); NAGATA, Kouichirou, Tokyo 100-8280 (JP)
(74) Representative: Mewburn Ellis LLP
(86) International application number: PCT/JP2017/020280
(87) International publication number: WO 2018/220751

(56) References cited:
- EP-A1- 2 004 468
- EP-A2- 2 698 916
- WO-A1-2016/147360
- JP-A- 2007 265 361
- JP-A- 2008 116 317
- JP-A- 2014 048 929
- JP-A- H 096 432
- JP-A- H 096 432
- JP-B1- 5 968 579
- US-A1- 2014 306 626
- PANA T ED - INSTITUTE OF ELECTRICAL AND ELECTRONICS ENGINEERS: "SENSORLESS VECTOR-CONTROLLED INDUCTION MOTOR DRIVE SYSTEM WITH ROTOR RESISTANCE ESTIMATION USING PARALLEL PROCESSING WITH FLOATINGPOINT DSP", PROCEEDINGS OF THE IECON '97 : 23RD. INTERNATIONAL CONFERENCE ON INDUSTRIAL ELECTRONICS, CONTROL, AND INSTRUMENTATION. NEW ORLEANS, NOV. 9 - 14, 1997; [PROCEEDINGS OF IEEE IECON: INTERNATIONAL CONFERENCE ON INDUSTRIAL ELECTRONICS, CONTROL, AND INSTRU, vol. 2, 9 November 1997 (1997-11-09), pages 948 - 953, XP000898602, ISBN: 978-0-7803-3933-0, DOI: 10.1109/IECON.1997.672117

## Description

### Technical Field

The present invention relates to a state monitoring device which estimates a state of a device system equipped with a device driven by a motor as well as to a device system equipped with the state monitoring device.

### Background Art

Machine tool systems used in factories or the like are required to perform close monitoring of operating state of the devices and the state of products produced by the devices for the purposes of achieving productivity enhancement and ensuring stable quality of the products. Further, vehicle device systems including railways, automobiles and the like are also required to monitor the operating state of the device systems in order to predict potential breakdown of the device.

Such a state monitoring normally employs a sensor for directly acquiring a state quantity. However, some device systems may suffer from physical difficulty or cost-wise impracticability in installing the sensors. On the other hand, there is known a conventional art such as disclosed in Patent Literature 1.

A motor controller according to the conventional art includes: a real machine part including a motor, a mechanism portion driven by the motor, and a motor controller; and a simulation model part including a motor model, a mechanism model portion, and a control model portion. Inertia determined from a rigid body model is set as a default value in the simulation model portion.

The real machine part and the simulation model part operate according to a position command applied from a host controller. At this time, a position feedback quantity detected by a position detector in the real machine part is compared with a model position feedback quantity of the simulation model part. Based on a comparison result, the inertia value set in the simulation model part is changed so that the feedback quantities match each other.

Just as described, the conventional art permits the device system such as a robot to easily estimate the inertia varying according to the state of the device system.

### Citation List

### Patent Literature

Patent Literature 1: Japanese Patent Application Laid-Open No. 2004-260891. JP5968579B1 proposes a drive machine life evaluation device and a drive machine life evaluation method for evaluating the life of a drive having a motor and a load device. PANA T ED - INSTITUTE OF ELECTRICAL AND ELECTRONICS ENGINEERS: "SENSORLESS VECTOR-CONTROLLED INDUCTION MOTOR DRIVE SYSTEM WITH ROTOR RESISTANCE ESTIMATION USING PARALLEL PROCESSING WITH FLOATINGPOINT DPS", PROCEEDINGS OF THE IECON '97: 23RD. INTERNATIONAL CONFERENCE ON INDUSTRIAL ELECTRONICS, CONTROL, AND INSTRUMENTATOIN. NEW ORELEANS, NOV. 9 - 14, 1997; vol. 2, 9 November 1997 (1997-11-09) pages 948-953 proposes a statistical based computing algorithm to avoiddivision by zero when estimating simulatoneous rotor speed and rotor resistance. JPH096432A proposes an apparauts for detecting an abnormality of a control system.

### Summary of Invention

### Technical Problem

According to the above-described conventional art, however, it is difficult to estimate the state of a device of a device system which is too complicated to be modeled by the use of a transfer function. For example, the quality of products molded by an injection molding machine (e.g., the presence or absence of burr) and the degree of deterioration of dies used for molding are difficult to model by the use of the transfer function on the basis of physical findings and theories.

In this connection, the invention provides a state monitoring device adapted for the estimation of the state of the device system which is difficult to model as well as a device system equipped with the state monitoring device.

### Solution to Problem

Accordingly a state monitoring device for a device system is provided as set out in claim 1 and a device system is provided as set out in claim 11.

According to an aspect of the invention for achieving the above object, a device system including a device driven by a motor, includes: an actuator operated by a drive force of the motor; a motor controller for controlling the motor; the state monitoring device of the first aspect; and an information transfer unit for displaying information on the state of the device system estimated by the state estimator.

### Advantageous Effects of Invention

According to the invention, the state of the device system which is difficult to model, can be estimated by estimating the state of the device system on the basis of the motor control internal value.

Problems, components and effects other than those described above will become apparent from the following description of the embodiments of the invention.

### Brief Description of Drawings

Fig. 1 shows an example of time varying characteristic value of a motor according to an embodiment of the invention.
Fig. 2 shows a configuration of a device system including a state monitoring device.
Fig. 3 is a block diagram showing a configuration of a motor controller.
Fig. 4 is a block diagram showing a configuration of a motor control internal value generator.
Fig. 5 is a block diagram showing an exemplary configuration of a state calculator.
Fig. 6 is a block diagram showing an exemplary configuration of the state calculator.
Fig. 7 is a block diagram showing an exemplary configuration of an information transfer unit.
Fig. 8 shows a configuration of a current command generator.
Fig. 9 shows a configuration of a device system including a state monitoring device according to an example of the present invention.
Fig. 10 shows an exemplary configuration of a state estimator update unit.
Fig. 11 shows examplary updates of a state estimation model.
Fig. 12 shows a configuration of a device system including a state monitoring device.
Fig. 13 shows a configuration of a device system including a state monitoring device according to an example of the present invention.
Fig. 14 shows a configuration of a machine tool system according to an example 5 hereof.
Fig. 15 shows a configuration of a vehicle device system according to an example 6 hereof.

### Description of Embodiments

According to the embodiments of the invention, the state of a device system, which is too complicated to model by the use of the transfer function, is estimated by the use of a motor control internal value highly associated with the state of the device system. Further, a device system adapted to reduce load on device operators is constructed by using the estimated state.

It is noted here that the state of the device system includes for example: states of the device per se such as the presence or absence of abnormal operating state, and the degree of deterioration of the device; and states, such as quality, of products produced by the device system. A state quantity is a measure indicating the state of the device system. In the embodiments hereof, the state quantity is is estimated without employing special means (complicated simulation or the like), but by the use of the motor control internal value.

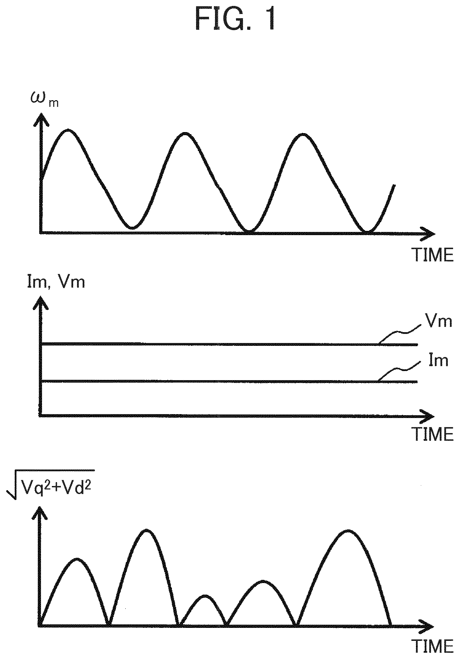

First, a mechanism for estimating the state of the device system by the use of the motor control internal value is described with reference to Fig. 1.

Fig. 1 shows an example of time varying characteristic value of a motor (time-series data) according to the embodiments of the invention. In the figure, 'ωm', 'Im' and 'Vm' denote the rotational speed of motor, the motor current and the motor voltage of a real machine, respectively. The figure also shows time varying square-root of sum of squares of q-axis voltage command value Vq and d-axis voltage command value Vd which are the motor control internal values.

It is noted that the motor is driven by an inverter and subjected to a so-called vector control that maintains the motor current at a constant value.

Because of the occurrence of load pulsation, as shown in Fig. 1, the rotational speed of motor (ωm) pulsates. In a case where the device system is not equipped with a motor speed sensor although provided with a current sensor and a voltage sensor, the device system can acquire information on the motor current and motor voltage (Im, Vm) but it is difficult for the device system to estimate the load pulsation from these information pieces.

As shown in Fig. 1, on the other hand, the square-root of sum of the squares of q-axis voltage command value Vq and d-axis voltage command value Vd contains information on motor pulsation. When the rotational speed of motor varies in conjunction with the load pulsation, the motor current oscillates at an early stage. However, the constant motor current control is provided to maintain the motor current at a constant value by pulsating the q-axis voltage command value Vq and the d-axis voltage command value Vd. As a result, the pulsation information does not appear on the motor current (Im) or motor voltage (Vm), but the pulsation information appears on the square-root of sum of the squares of q-axis voltage command value Vq and d-axis voltage command value Vd. Namely, the motor load indicating one state quantity of the device system can be estimated on the basis of the q-axis voltage command value Vq and the d-axis voltage command value Vd as the motor control internal value.

The embodiments of the invention will be specifically described as below by way of examples 1 to 6 hereof and with reference to the accompanying drawings. In the figures, like names and like reference numerals refer to components having the same or similar constituent features.

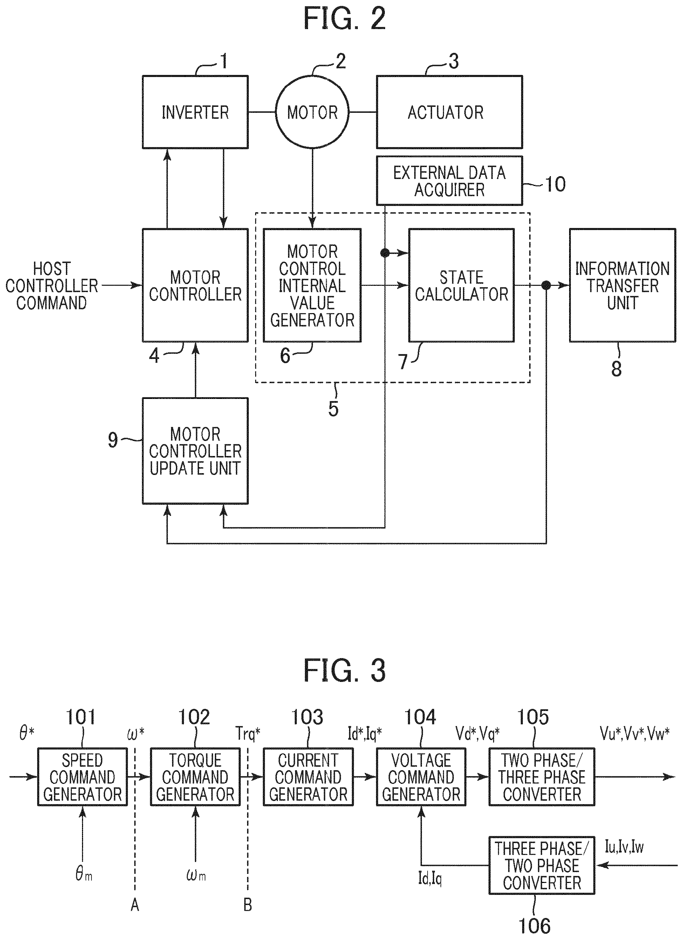

Fig. 2 shows a configuration of a device system with a state monitoring device. An arithmetic processing unit such as a microcomputer functions as a controller and the state monitoring device by executing predetermined programs (The same holds for the other examples hereof).

The system includes as a power source: an inverter 1 and a motor 2 driven into rotation by the inverter 1. The system further includes an actuator 3 so driven by the motor 2 as to perform mechanical movements.

The inverter 1 is controlled by a motor controller 4 to which the so-called vector control method is applied. The motor controller 4 acquires from the inverter 1 or the motor 2 information pieces such as motor current, motor voltage, rotor position and rotational speed. In response to a command from a host controller, the motor controller generates a voltage command value for driving the motor 2 on the basis of these information pieces. The motor controller 4 supplies the resultant voltage command value to the inverter 1.

An external data acquirer 10 is composed of sensors and the like which are disposed at devices other than the motor 2 and the inverter 1, and acquires device temperature, ambient temperature, high-order command values for the device and the like.

A state estimator 5 includes: a motor control internal value generator 6 for generating a motor control internal value; and a state calculator 7 for calculating a state quantity of the device system on the basis of the motor control internal value generated by the motor control internal value generator 6.

The motor control internal value generator 6 generates the motor control internal value which is a state variable of the motor controller 4 and is relevant to the state of the device system on the basis of the time-series data acquired by a current sensor, a voltage sensor and a position sensor disposed at an input part or output part of the motor 2 and independent from those for the motor controller 4, and the data acquired by the external data acquirer 10.

The state calculator 7 includes a state estimation model and uses the state estimation model for calculating the state quantity on the basis of the motor control internal value generated by the motor control internal value generator 6. The state quantity indicates the state of the device system, namely the state of the device per se or the state (quality or the like) of products produced by the device.

Specifically, the state estimator 5 receives the data acquired by the above-described sensors and the external data acquirer 10 so as to generate the motor control internal value on the basis of input data, and outputs the state quantity calculated on the basis of the motor control internal value thus generated or information on the state of the device system indicated by this state quantity (hereinafter, described as "estimated state"). The estimated state outputted from the state estimator 5 is transferred to an information transfer unit 8 and a motor controller update unit 9 to be described hereinlater.

In response to the estimated state outputted from the state estimator 5, the information transfer unit 8 gives information on the state of the device system such as information on the state of the device per se or the change thereof or information on the quality of the product or the change thereof to the operator using the device system or a manager of the device system by means of display, sound, lamp or the like. Thus is achieved the reduction of workload required for checking timing of device maintenance, state assessment in the quality change and readjustment of the device.

The motor controller update unit 9 changes the motor controller 4, namely a control command, a control parameter or control software on the basis of the estimated state outputted from the state estimator 5. In a case where the products have changed in quality, the motor controller update unit 9 changes the motor controller 4 so as to suppress the change in product quality. This permits adjustment work for the device system to be automated, leading to the reduction of workload.

Next, more detailed descriptions are made on the motor controller 4 and the state estimator 5.

Fig. 3 is a block diagram showing a configuration of the motor controller 4.

While Fig. 3 shows a position command θ* as a command from the host controller, the command may be a speed (rotational speed) command ω* or a torque command Trq*. In a case where the command from the host controller is the speed (rotational speed) command ω* and the torque command Trq*, block diagrams of the motor controller 4 correspond to a block on the right side of a border line A in Fig. 3 and to a block on the right side of a border line B, respectively.

When the position command θ* is inputted from the host controller to the motor controller 4, as shown in Fig. 3, a speed command generator 101 generates a speed command ω* on the basis of a difference between a position feedback value θm measured by a sensor and the position command value θ* and outputs the resultant command.

When the speed command ω* is inputted, a torque command generator 102 generates a torque command Trq* on the basis of a difference between a speed (rotational speed) feedback value ωm measured by a sensor and the speed command ω* and outputs the resultant command.

When the torque command Trq* is inputted, a current command generator 103 generates current commands on d-axis and q-axis of a rotating system of coordinates, namely a d-axis current command Id* and a q-axis current command Iq* on the basis of the torque command Trq* and outputs the resultant commands.

When the d-axis current command Id* and the q-axis current command Iq* are inputted, a voltage command generator 104 generates voltage commands on the d-axis and q-axis of the coordinates, namely a d-axis voltage command Vd* and a q-axis voltage command Vq* on the basis of a difference between a d-axis current feedback value Id and the d-axis current command Id* and a difference between a q-axis current feedback value Iq and the q-axis current command Iq* and outputs the resultant commands.

It is noted here that the d-axis current feedback value Id and the q-axis current feedback value Iq are obtained through three-phase to two-phase conversion where a three phase/two phase converter 106 converts a U-phase current feedback value Iu, a V-phase current feedback value Iv and a W-phase current feedback value Iw measured by sensors into two-phase quantities.

When the d-axis voltage command Vd* and the q-axis voltage command Vq* are inputted, a two phase/three phase converter 105 converts the d-axis voltage command Vd* and the q-axis voltage command Vq* into a U-phase voltage command Vu*, a V-phase voltage command Vv* and a W-phase voltage command Vw* and outputs these voltage commands to the inverter 1.

Next, the description is made on the state estimator 5.

As described above (see Fig. 2), the state estimator 5 includes the motor control internal value generator 6 and the state calculator 7. The description is first made on the motor control internal value generator 6 and then, on the state calculator 7.

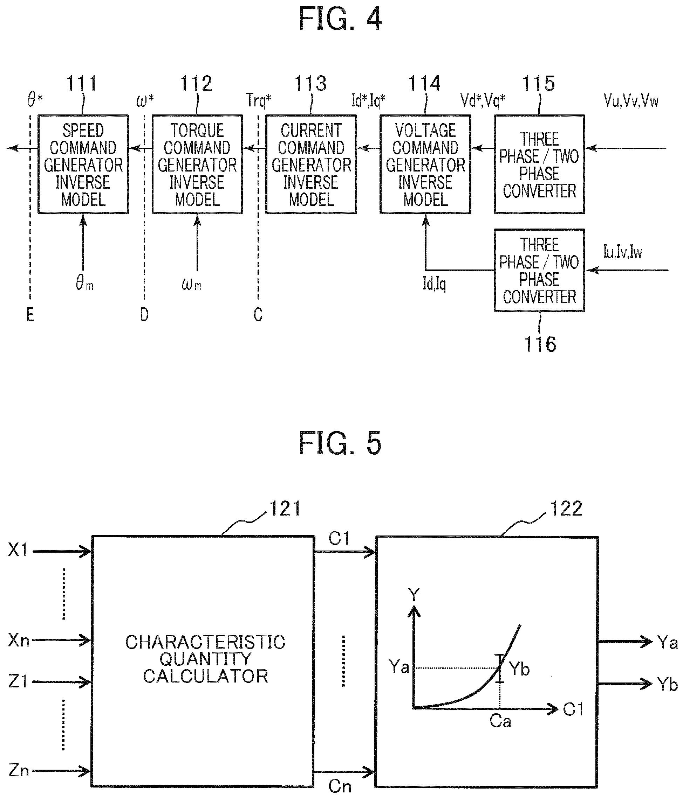

Fig. 4 is a block diagram showing a configuration of the motor control internal value generator 6.

As shown in Fig. 4, the motor control internal value generator 6 is a so-called reverse model of the motor controller 4 shown in Fig. 3. Specifically, the motor control internal value generator 6 includes: a speed command generator inverse model 111; a torque command generator inverse model 112; a current command generator inverse model 113; a voltage command generator inverse model 114; a three phase/two phase converter 115 and a three phase/two phase converter 116 which correspond to the speed command generator 101, the torque command generator 102; the current command generator 103; the voltage command generator 104; the two phase/three phase converter 105; and the three phase/two phase converter 106, respectively.

While Fig. 4 shows the position command θ* as a command outputted from the host controller to the motor controller 4, the host controller may also output the torque command Trq* or speed command ω*. In a case where the commands from the host controller are the torque command Trq*, the speed command ω*, and the position command θ*, the block diagrams of the motor control internal value generator 6 correspond to a block on the right side of a border line C in Fig. 4, a block on the right side of a border line D and to a block on the right side of a border line E, respectively.

According to the configuration shown in Fig. 4, the motor control internal value generator 6 calculates: the d-axis current feedback value Id and the q-axis current feedback value Iq; the d-axis voltage command Vd* and the q-axis voltage command Vq*; the d-axis current command Id* and the q-axis current command Iq*; the torque command Tr q*; the speed command ω*; and the position command θ* on the basis of any one or more of the motor three-phase voltage feedback values Vu, Vv, Vw; the motor three-pahse current feedback values Iu, Iv, Iw; speed feedback value ωm; and the position feedback value θm which are the time-series data acquired by the current sensor, the voltage sensor and the position sensor which are disposed at the input part or output part of the motor 2 and independent from those for the motor controller 4.

The state variables of the motor controller 4 θ*, θm, ω*, ωm, Trq*, Id*, Iq*, Id, Iq, Vd*, Vq*, Vu*, Vv*, Vw*, Vu, Vv, Vw, Iu, Iv, Iw; the difference between the command value and the measured value; and output values of a comparator, integrator and a differentiator constituting the controller are the motor control internal values. Specifically, any one or more of these motor control internal values of the motor controller 4 are generated by the motor control internal value generator 6.

Out of the state variables of the motor controller, those state variables that are generated and used in the process by the motor controller 4 but not outputted from the motor controller 4 (such as Id*, Iq*, Id, Iq, Vd*, Vq*) can also be generated by the motor control internal value generator 6 shown in Fig. 4. Accordingly, the system is applicable to the estimation of various states of a wide variety of device systems.

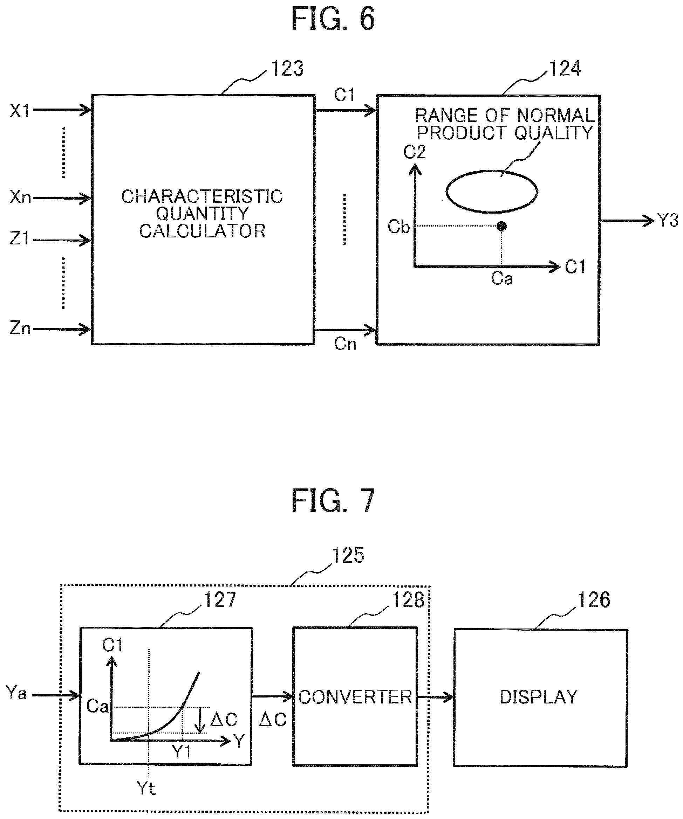

Fig. 5 and Fig. 6 are block diagrams showing an exemplary configuration of the state calculator 7.

As described above, the state calculator 7 (see Fig. 2) calculates a state quantity indicating a state of the device system, namely a state of the device per se or a state (such as quality) of products produced by the device on the basis of at least one motor control internal value generated by the motor control internal value generator 6. It is noted that the state calculator 7 may also calculate the state quantity on the basis of data (such as device temperature) acquired by the external data acquirer 10 (see Fig. 2) in addition to the motor control internal value. Fig. 5 and Fig. 6 show the motor control internal value (X1 to Xn) and the data (Z1 to Zn) acquired by the external external data acquirer 10 are inputted to the state calculator 7.

In Fig. 5 and Fig. 6, X1 to Xn denote the motor control internal value while Z1 to Zn denote the information acquired by the external data acquirer 10. The state calculator 7 receives at least one motor control internal value. Whether or not the information acquired by the external data acquirer 10 is inputted and the number of inputs are arbitrary.

The type and the number of motor control internal values and information pieces acquired by the external data acquirer 10, as inputted to the state calculator 7, are set according to the configuration (such as statistical model to be described hereinlater) of the state calculator.

While 'n' is used as the index of Xn, Zn, Cn (to be described hereinlater) in Fig. 5 and Fig. 6 for convenience, the 'n' indicates that the respective numbers of Xn, Zn, Cn are arbitrary but does not mean that the numbers of Xn, Zn, Cn are the same.

According to the exemplary configuration of Fig. 5, the state calculator 7 has a regression formula as a statistical model used for the calculation of state quantity. According to this exemplary configuration, the state calculator 7 includes: a characteristic quantity calculator 121 for determiing a characteristic quantity as an explanatory variable of the regression formula; and a computing unit 122 for calculating a state quantity (objective variable) by applying the characteristic quantity set by the characteristic quantity calculator 121 to the regression formula.

The characteristic quantity calculator 121 receives Xn and Zn so as to calculate a characteristic quantity Cn (explanatory variable) on the basis of the input Xn and Zn. The characteristic quantity is inputted to the computing unit 122. The characteristic quantity calculator 121 may output instantaneous data of Xn and Zn directly as the characteristic quantity Cn. Otherwise, the characteristic quantity calculator may output the results (amplitude, phase and the like) of frequency analysis of the instantaneous data of Xn and Zn in a predetermined time segment; effective value, average value, standard deviation, maximum or minimum value in the predetermined time segment; or overshoot quantity or peak value in the predetermined time segment. The number of characteristic quantities Cn may be one or more than one depending upon the regression formula.

Further, the characteristic quantity calculator 121 may also output, as the characteristic quantity, a predetermined quantity calculated from the motor control internal value, such as effective electric power, reactive power, square-root of sum of Vq and Vd such as shown in Fig. 1. Further, disturbance torque estimated by a so-called observer or the like may also be used as the characteristic quantity. These characteristic quantities may also be subjected to frequency analysis or statistical calculation (average) before outputted.

The computing unit 122 receives the characteristic quantities C1 to Cn outputted from the characteristic quantity calculator 121 and calculates state quantity estimate values (Ya, Yb) on the basis of the characteristic quantities C1 to Cn.

As indicated by the graph of the figure, the exemplary configuration of Fig. 5 uses a one-dimensional regression formula where the characteristic quantity C1 is used as the explanatory variable while the state quantity Y indicating the device state or the product quality is used as the objective variable. In a case where the value of the input characteristic quantity C1 is Ca, the computing unit 122 outputs a calculated value Ya of the regression formula for Ca as a present state quantity (estimate value) . The computing unit 122 also outputs a standard deviation Yb of the state quantity for Ca as the state quantity (estimate value). As just described, the use of the regression formula provides the estimation of average state quantity as well as the estimation of dispersion quantity of the state quantity. Therefore, not only the state of the device or product but also the incidence rate of the state of interest can be estimated by the use of the regression formula.

The state estimator 5 may output the calculated state quantity (estimate value) as the estimated state or may output the information on the state of the device system indicated by the state quantity (e.g., the operating state of the device or quality of the products) as the estimated state.

The regression formula of the computing unit 122 is previously obtained by statistical modeling or the like using previously acquired motor control internal value data, monitoring data of the device state at the time of acquisition of the relevant data, and result of product inspection.

Another exemplary configuration of the state calculator 7 is shown in Fig. 6.

According to the exemplary configuration of Fig. 6, the state calculator 7 has a clustering result as the statistical model used for the state quantity calculation. The state calculator 7 according to the exemplary configuration includes: a characteristic quantity calculator 123 having the same function as the above-described characteristic quantity calculator 121 of Fig. 5; and a classifier 124 for calculating a state quantity on the basis of the characteristic quantity set by the characteristic quantity calculator 121 and by using the clustering result regarding the device state or product state.

The signs X1 to Xn, Z1 to Zn and C1 to Cn in Fig. 6 are just as explained with reference to Fig. 5.

In a characteristic quantity space (two dimensional space (C1, C2) as seen in Fig. 6) previously obtained by clustering, the classifier 124 calculates a distance between a range where the device or product exhibits a predetermined state (e.g., normal state) and a characteristic quantity C1 to Cn set by the characteristic quantity calculator 121, namely a spatial point in the characteristic quantity space. On the basis of the calculated distance, the classifier determines whether the device or product is in the predetermined state or not. The classifier 124 outputs a state quantity (estimate value) Y3 according to the determination result.

In a case where the input characteristic quantities C1 and C2 are Ca and Cb, respectively, as indicated by the example of clustering result shown in the figure, the classifier 124 of the exemplary configuration of Fig. 6 calculates the distance between the point (Ca, Cb) in the two dimensional characteristic quantity space and the range of normal product quality (cluster) in this space. The classifier 124 outputs the calculated distance or a predetermined quantity corresponding to the distance as the state quantity (estimate value) Y3. It is noted here that Euclidean distance or Mahalanobis distance, for example, are usable as the calculated distance.

The state estimator 5 may output the calculated state quantity (estimate value) as the estimated state. Otherwise, the state estimator may also output information on the state of the device system indicated by the state quantity (such as abnormalities in the device or product quality abnormality) as the estimated state.

Just as described, the use of the clustering result provides high accuracy estimation of whether or not the device or product is in the predetermined state (such as the normal state).

The characteristic quantity space is not limited to the two dimensional space but may also be a multidimensional space of three or more dimensions. Further, more than one range (cluster) of the predetermined state quantity may be used for the determination of the distance. This makes it possible to determine which of the plural predetermined states is the state of the device or product.

The clustering result used by the classifier 124 is previously obtained by machine learning or artificial inteligence which uses the motor control internal value acquired in the past, the monitoring data of the device state at the time of acquisition of the relevant data and the result of product inspection.

Even in the case of the deterioration of device or the quality of product, which is hard to model by the use of the transfer function or the physical model of which is hard to construct, the state of the device system can be estimated with high accuracies by using the statistical model for calculation of the state quantity.

Next, the information transfer unit 8 is described in more detail.

The information transfer unit 8 (see Fig. 2) displays the estimated state outputted from the state estimator 5 by way of image or sound. Further, the information transfer unit may also display, along with the estimated state, the characteristic quantity used by the state estimator 5. Furthermore, the information transfer unit may also display the estimated state over time. Such displays permit the operator to comprehend the present state of the device or product accurately. The information transfer unit may also display reference value or threshold value and the meaning of the data (such as information on the necessity of adjustment of the device) in parallel. This permits the operator to make an accurate decision on the quality or acceptability of the device or product.

Information display device includes: image display devices such as display; sound display devices such as alarm; and a lighting display device such as rotating red light. In a case where an alarm or a rotating warning light is used, for example, the information transfer unit 8 compares the state quantity estimate value Ya with a predetermined threshold value and activates the alarm or rotating warning light if the state quantity estimate value is equal to or more than the threshold value.

Fig. 7 is a block diagram showing an exemplary configuration of the information transfer unit 8. The exemplary configuration includes: an information processor 125 which displays the data items including the state quantity (estimate value) and the characteristic quantity and generates information on the state of the device or products by processing these data items; and a display for displaying the information generated by the information processor 125. The information generated by the information processor is an index for device adjustment which is used, for example, in a case where a state quantity (estimate value) Y1 (=Ya) indicating the product quality exceeds a specification value (Yt). The index is used for lowering the state quantity Y to Yt or less.

According to the exemplary configuration of Fig. 7, the state quantity (estimate value) Ya or the estimated state outputted by the state estimator 5 (Fig. 2) is inputted to a regression formula inverse model unit 127 of the information processor 125. The regression formula inverse model unit 127 is an inverse model of the above-described computing unit 122 (Fig. 5). In response to the input Ya, the regression formula inverse model unit calculates a variation ΔC of the characteristic quantity C1 such as to lower the state quantity Y (=Y1=Ya) indicating the quality to a value equal to the specification value Yt or less.

A converter 128 of the information processor 125 generates the index for device adjustment according to the variation ΔC of the characteristic quantity calculated by the regression formula inverse model unit 127. For example, the converter 128 calculates a changed value K' of a control gain (=K*(Ca-ΔC)/Ca(K: present control gain) for the motor controller 4 (Fig. 2) . According to the changed value K' of the control gain, the converter 128 displays, on a display 126, an image of an index for adjustment of the control gain (for example, to increase or decrease the control gain from the present level). Incidentally, the converter may also display the value of K'.

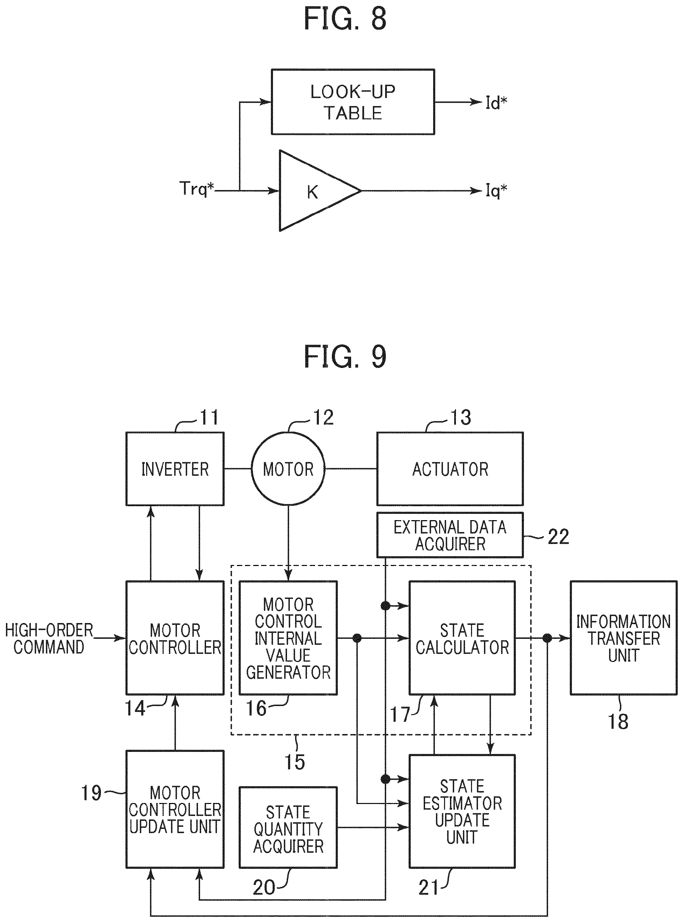

In a case where the characteristic quantity C1 is the q-axis current command Iq*, an adjustment index of the control gain (K) for the current command generator 103 (Fig. 3) of the motor controller 4 (Fig. 2) is displayed. A configuration of the current command generator 103 of this case is shown in Fig. 8. Since the configuration of Fig. 8 is based on the publicly known technique, the description of the configuration is dispensed with.

The information transfer unit shown in Fig. 7 displays the indexes for the adjustment work. This not only enables the operator to accomplish an appropriate adjustment of the device but also reduces the load on the operator involved in the device adjustment work.

Next, the motor controller update unit 9 is described in more detail.

In response to the estimated state outputted from the the state estimator 5, the motor controller update unit 9 (Fig. 2) updates a motor control command value and a control parameter of the motor controller. For instance, the motor controller update unit 9 compares the state quantity (estimate value) with the predetermined threshold value and increases or decreases the previously set motor control command value and control parameter according to the comparison result.

The motor controller update unit 9 may also change the motor control command value or control parameter by using a predetermined function in place of the threshold value. In a case where more than one state quantity (estimate value) is inputted, the motor controller update unit 9 may use machine learning to search for a motor control command value and motor control parameter to be changed and to change the searched motor control command value and motor control parameter according to these plural state quantities (estimate values). Reinforcement learning such as Q-learning is applicable as the machine learning.

Further, not only the motor control command value and the motor control parameter but also motor control software per se may be changed.

The motor controller update unit 9 as described above provides automatic adjustment of the device according to the state of the device or product. Thus, the workload on the operators can be reduced.

According to description above, the state of the device system, which is difficult to model by the use of the transfer function or the like, can be estimated by estimating the state of the device system, namely the motor control internal value affecting the state of the device per se or the product state on the basis of the sensor information or the information acquired by the external data acquirer, followed by estimating the state of the device system on the basis of the motor control internal value thus estimated.

While the motor control internal value generator 6 generates the motor control internal value on the basis of the data acquired by the sensors disposed independently from those for the motor controller 4, the motor control internal value may also be generated on the basis of the data acquired by the sensors for the motor controller 4. Thus, a state monitoring function can be imparted to the device system without increasing the number of sensors. In a case where a state monitoring device equipped with the state estimator 5 shown in Fig. 2 is added to the device system by installing an independent sensor for state monitoring purpose, the device system does not require wiring change or characteristic readjustment of the sensors for the motor controller 4. Therefore, the state monitoring device can be easily added to the device system. Particularly, the state monitoring device can be easily added to the existing device system. Since the state monitoring device does not affect the operations of the motor controller, the motor controller does not require the readjustment thereof. At the same time, the motor controller can maintain the motor control irrespective of the operation of the state monitoring device.

### Example 1

Fig. 9 shows a configuration of a device system with a state monitoring device according to an example 1 hereof. The following description mainly focuses on differences from the system described previously.

In the example1, the regression formula, the clustering result and the like which are used by a state calculator 17 are updated according to the state of a device system. Therefore, as shown in Fig. 9, a state quantity acquirer 20 and a state estimator update unit 21 are added to the device system discussed above.

The state quantity acquirer 20 extracts, from the records (not shown) of actual state of the device system, data used by the state estimator update unit 21, namely actual state quantities recorded. Such records include, for example, records of past maintenance jobs done on the device and records of past inspection of product quality.

The contents of the maintenance records include for example: failure part of the device; failed state (such as broken condition (fracture, crack) of machining tool of machine tool); operating time to failure; location of abnormality less serious than failure; abnormal state; and operating time to abnormality. The contents of the records of inspection of product quality include for example: surface roughness of cutting object machined by a cutting machine; viscosity of kneaded product kneaded by a kneader; and the presence of burrs or warp of molded product by injection molding machine. These records are often digitized and stored in a database. Accordingly, the state quantity acquirer 20 may be composed of software capable of dealing with database manipulation SQL (Structured Query Language).

The state estimator update unit 21 receives the data extracted by the state quantity acquirer 20, at least one motor control internal value associated with this data and the information outputted from the state calculator 17, and updates the regression formula, the clustering result and the like, as used by the state calculator 17, on the basis of these information pieces. It is noted here that the motor control internal value received by the state estimator update unit 21 is data at the time of acquisition of the data (the result of device maintenance, the result of product inspection and the like) inputted from the state quantity acquirer 20 and is recorded as associated with the record of the state of the device system. In response to the extraction of the data (the recorded actual state quantity) by the state quantity acquirer 20, therefore, the corresponding motor control internal value is inputted to the state estimator update unit 21.

While Fig. 9 shows that information from an external data acquirer 22 is also inputted to the state estimator update unit 21, the specification of the information from the external data acquirer 22 is arbitrary. Incidentally, the state calculator can be updated with high accuracies by using the information from the external data acquirer 22 in combination.

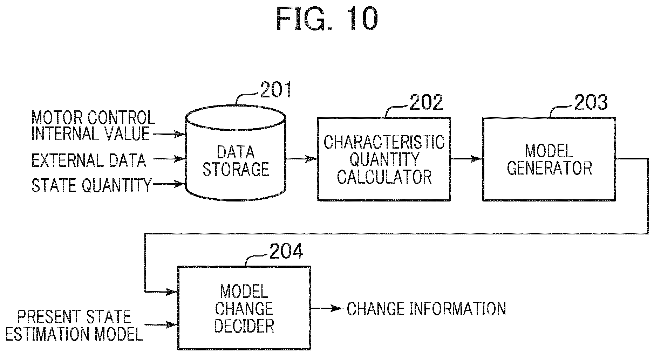

Fig. 10 shows an exemplary configuration of the state estimator update unit 21.

As described above, the motor control internal value, the state quantity of the device or product, and the external data are accumulated in a data storage unit 201 for a certain period of time from the past to the present. It is preferred that an acquisition period of the data stored, the timing to store the data and the quantity of the data stored are previously defined.

The data stored in the data storage unit 201 is inputted to a characteristic quantity calculator 202. The function of the characteristic quantity calculator 202 is the same as that of the characteristic quantity calculators 121, 123 (Fig. 5, Fig. 6) .

A characteristic quantity of the motor control internal value, as calculated by the characteristic quantity calculator 202, is inputted to a model generator 203. On the basis of the input characteristic value and a state quantity retrieved from the data storage unit 201, the model generator 203 generates the regression formula by means of statistical modeling or machine leraning, or performs the clustering by means of machine learning or artificial intelligence. When generating the regression formula or performing the clustering, the model generator performs the modeling by using the state quantity and the characteristic quantity as the objective variable and the explanatory variable, respectively.

A model change decision unit 204 compares a state estimation model (such as the regression formula or clustering result) generated by the model generator 203 with a state estimation model (such as the regression formula or clustering result set in the state estimator) currently used for the state estimation, so as to determine whether or not parameters of the state estimation model currently used need be changed, or determines whether or not the model per se need be changed. The model change decision unit 204 outputs the determination result as change information. On the basis of the change information, a state estimator 15 updataes the state estimation model set in the state calculator 17.

The state estimation model may be updated at predetermined intervals or on an irregular basis. In a case where the regression formula is outputted from the model generator 203, it is preferred to update only the parameters if the currently used regression formula and the regression formula outputted from the model generator 203 are in the same form (for example, both are in linear form) . If the outputted regression formula is changed in the form, it is preferred to update the whole formula. In a case where the clustering result is outputted from the model generator 203, it is preferred to update the currently used clustering result to the result outputted from the model generator 203.

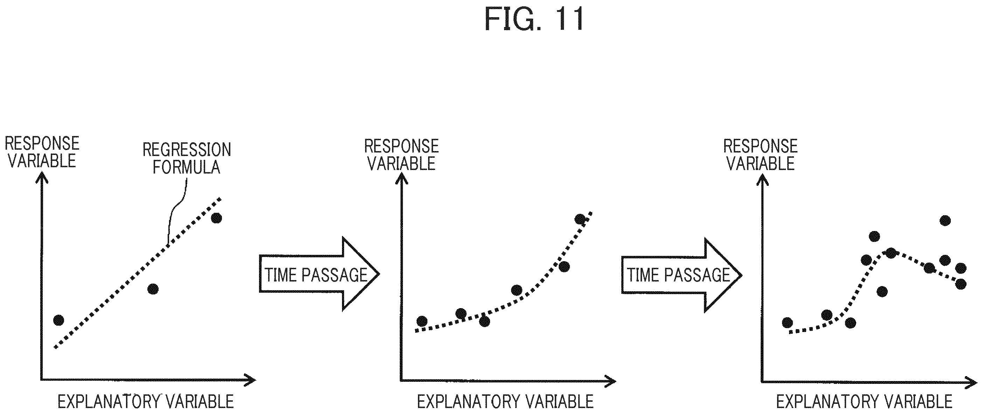

Fig. 11 shows examplary updates of the state estimation model in a case where the state estimation model is expressed by the regression formula. In this example, the form of the regression formula changes with time so that the entire formula is updated.

According to the example 1 as described above, the state estimation model is updated by the state estimator update unit 21 and hence, the accuracy of the state estimation is ensured if the state of the device or the product changes with time.

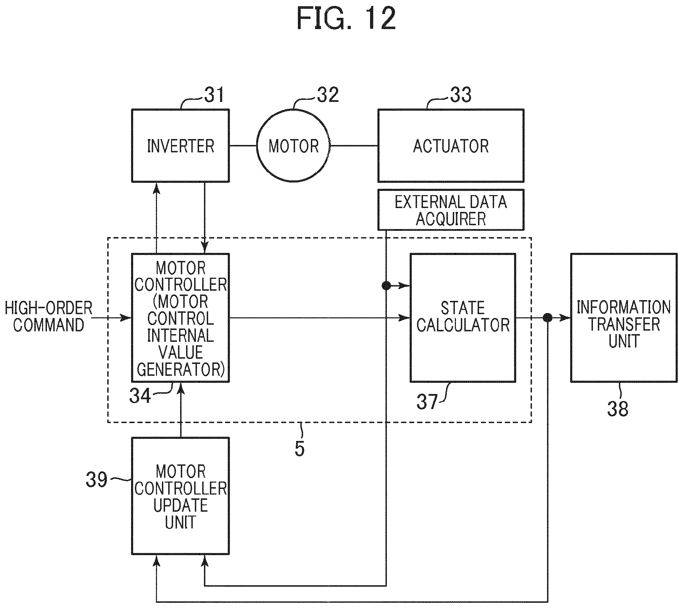

Fig. 12 shows a configuration of a device system with a state monitoring device. The following description mainly focuses on differences from the system discussed above.

Just as discussed above, a motor controller 34 here generates the voltage command applied to an inverter 31 and has a function as the motor control internal value generator 6. While the motor controller 34 has the same configuration as that discussed above (see Fig. 3), the motor controller 34 outputs to a state calculator 37 the motor control internal values (Id, Iq, Vd*, Vq*, Trq*, ω* and the like) in the process of generating the voltage command in response to a high-order command.
Tthe device system can be simplified because the motor controller doubles as the motor control internal value generator so that the sensor for the motor control purpose is also used for the generation of the motor control internal value.

### Example2

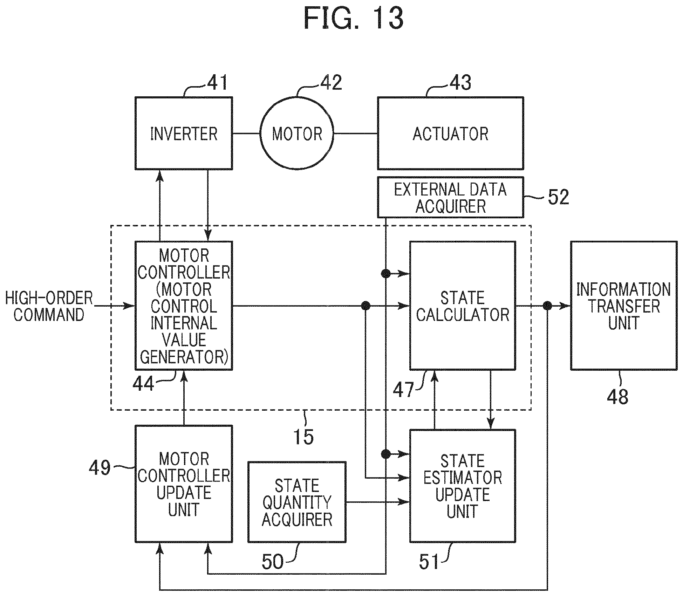

Fig. 13 shows a configuration of a device system with a state monitoring device according to an example 2 hereof. The following description mainly focuses on differences from the system discussed above.

According to the example, a state quantity acquirer 50 and a state estimator update unit 51 are added to the device system. According to the example 2, just as in the above-described example shown in Fig. 9, the regression formula and the clustering result used by a state calculator 47 are updated according to the state of the device system.

According to the example 2, the device system can be simiplified. In addition, the device system can ensure the accuracy of the state estimation although the state of the device or the product changes with time.

### Example 3

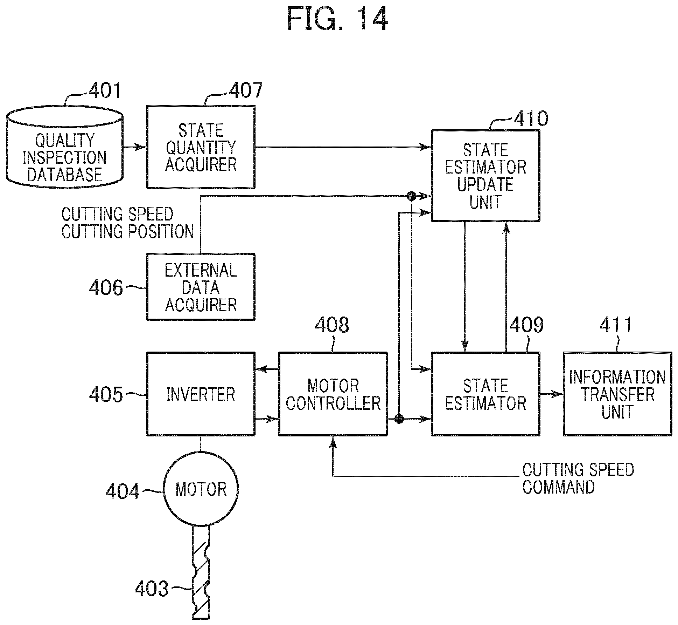

Fig. 14 shows a configuration of a machine tool system with a milling machine according to an example 3hereof. This device system is equipped with the same state monitoring device as that of the example 2 shown in Fig. 13.

In the example 3as shown in Fig. 14, an actuator driven by a motor is an end mill 403 or a machining tool of a milling machine. Amotor controller 408 controls an inverter 405 on the basis of a cutting speed command from a milling machine controller (not shown) as the host controller so that a motor 404 and the end mill 403 are driven.

An external data acquirer 406 acquires information pieces such as cutting feed rate and cutting position from the milling machine controller. A state quantity acquirer 407 acquires from a quality inspection database 401 an inspection result of surface roughness of a plate material cut with the milling machine. These acquired data items and the motor control internal value outputted from the motor controller 408 are inputted to a state estimator update unit 410 which generates and updates the regression formula used by a state estimator 409. Using the regression formula, the state estimator 409 estimates the quality of a cutting object during the cutting work.

An information transfer unit 411 indicates an estimation result of the quality of the cutting object calculated by the state estimator 409, the explanatory variable (the characteristic quantity of the motor control internal value) used for the quality estimation and the changes of these variables on a display disposed in vicinity of the milling machine.

It is noted that the configuration of shown in Fig .3 or the example 1 may be applied to the configuration of the state estimator of the example 3.

According to the example 3, a quantitative determination of the quality of the cutting object can be made in real time. This leads to the reduction of work load on the operator when checking the product quality or making device adjustment for quality improvement. Further, the example permits the quality of the cutting object to be determined without installing a special sensor, such as surface roughness meter, for detecting the quality of the cutting object.

The system configuration of the example 3is not limited to the machine tool system equipped with the milling machine but is also applicable to other machine tool systems such as one equipped with a drilling machine using a drill bit as a machining tool.

### Example 4

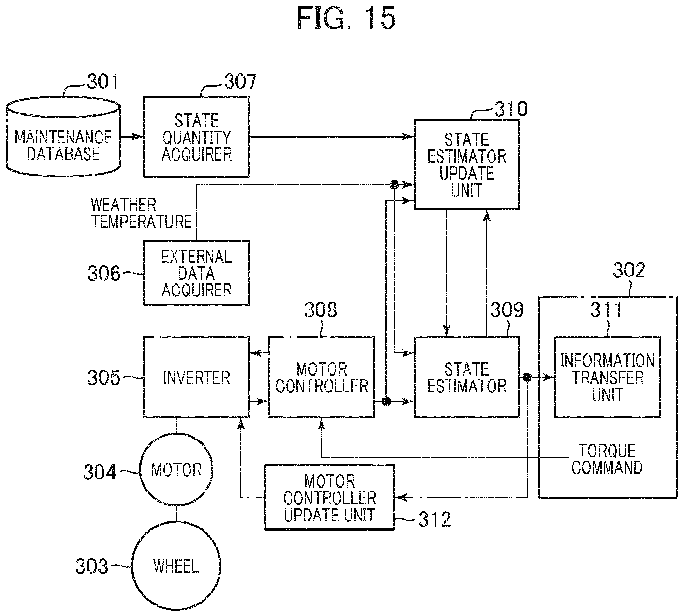

Fig. 15 shows a configuration of a vehicle device system according to an example 4hereof. The device system includes the same state monitoring device as that of the example 2 (see Fig. 13). The term "vehicle" used herein means an electric railway vehicle and electric motorcar.

According to the example 4, as shown in Fig. 15, an actuator driven by a motor is wheels 303. In response to a torque command from an accelerator driven by a driver or a master controller (not shown) as the host controller, a motor controller 308 controls an inverter 305 so that a motor 304 and the wheels 303 are driven.

An external data acquirer 306 acquires data items such as wether and temperature. A state quantity acquirer 307 acquires time for replacement of the wheels 303 or a failure factor from a maintenance database 301. These acquired data items and the motor control internal value outputted from the motor controller 308 are inputted to a state estimator update unit 310, which generates and updates a clustering result used by a state estimator 309. Using the clustering result, the state estimator 309 estimates the time for wheel replacement or a failure time. The information acquired by the external data acquirer 306 and the state quantity acquirer 307, and the motor control internal value may be acquired not only from an own vehicle but also from other vehicle.

An information transfer unit 311 displays, on a display disposed in vicinity of a driver seat, an estimation result of the time for wheel replacement or the failure time as estimated by the state estimator 309 and the change in the explanatory variable (the characteristic quantity of the motor control internal value) used for the estimation of the time for wheel replacement or the failure time.

In a case where the replacement time or the failure time is near as determined from the time for motor replacement or wheel replacement or the failure time as estimated by the state estimator 309, a motor controller update unit 312 changes a control command value or control parameter of the the motor controller 308 so as to perform an output limit operation for extending the service life of the device. This provides a quantitative determination of the wheel state or the like on a real-time basis. Hence, workload on an inspector checking for the wheel state or analyzing the failure factor can be reduced. Further, an abrupt system shut-down can be prevented because the operation for extending the device service life can be automatically performed.

It is noted that the configurations discussed above or the example 1 may be applied to the configuration of the state estimator of the example 4.

According to the example 4, the time for wheel replacement or the failure time can be determined with high accuracies. This leads to the reduction of maintenance rate, workload and maintenance costs. Further, the device is improved in reliability because a maintenance work for the device is performed at proper time so that the failure is prevented.

It is noted that the present invention is not limited to the above-described embodiments but can include a variety of modifications. The above-described examples hereof, for instance, are the detailed illustrations to clarify the invention. The invention is not necessarily limited to those including all the components described above. A part of the arrangement of each embodiment permits addition of some component of another embodiment, the omission thereof or replacement thereof.

### List of Reference Signs

1,11,31,41,305,405: inverter
2,12,32,42,304,404: motor
3,13,33,43: actuator
4,14,34,44,308,408: motor controller
5,15,309,409: state estimator
6,16: motor control internal value generator
7,17,37,47: state calculator
8,18,38,48,311,411: information transfer unit
9,19,39,49,312: motor controller update unit
10,22,52,306,406: external data acquirer
20,50,307,407: state quantity acquirer
21,51,310,410: state estimator update unit
101: speed command generator
102: torque command generator
103: current command generator
104: voltage command generator
105: two phase/three phase converter
106,115,116: three phase/two phase converter
111: speed command generator inverse model
112: torque command generator inverse model
113: current command generator inverse model
114: voltage command generator inverse model
121,123: characteristic quantity calculator
122: computing unit
124: classifier
125: information processor
126: display
127: regression formula inverse model unit
128: converter
201: data storage unit
202: characteristic quantity calculator
203: model generator
204: model change decision unit
301: maintenance database
302: driver seat
303: wheel
401: quality inspection database
403: end mill

## Claims

1. A state monitoring device for a device system including a device driven by a motor controlled by a motor controller, comprising:
a motor control internal value generator ( 16) configured to generate a motor control internal value as a state variable of the motor controller on the basis of at least two sensor signals or on a sensor signal in combination with a command value;
**characterized by**
a state estimator (15, 309, 409) configured to estimate a state of the device system on the basis of the motor control internal value generated by the motor control internal value generator and on the basis of a statistical model;
a state quantity acquirer (20), configured to acquire past data about the state of the device system; and
a state estimator update unit (21), configured to:
receive, from the state quantity acquirer, the past data about the state of the device system,
receive the generated motor control internal value generated at the motor control internal value generator,
and
update the statistical model on the basis of the data from the state quantity acquirer and the generated motor control internal value.

2. The state monitoring device according to Claim 1, wherein the state of the device system is a state of the device or a state of a product produced by the device.

3. The state monitoring device according to Claim 2, wherein the motor control internal value includes any of position feedback value, speed feedback value, d-axis current command, q-axis current command, d-axis current feedback value, q-axis current feedback value, d-axis voltage command, q-axis voltage command, output of a comparator, output of an integrator and output of a differentiator.

4. The state monitoring device according to Claim 3, wherein
the sensor information includes any of the position feedback value, the speed feedback value, the motor voltage feedback value and the motor current feedback value.

5. The state monitoring device according to Claim 1, wherein
the sensor information is acquired by either by:
a sensor disposed at an input part or output part of the motor controller or
a sensor disposed independently of the motor controller.

6. The state monitoring device according to Claim 1, further comprising an information transfer unit for displaying information on the state of the device system estimated by the state estimator.

7. The state monitoring device according to Claim 1, further comprising a motor controller update unit for updating the motor controller according to the state of the device system estimated by the state estimator.

8. The state monitoring device according to Claim 1, wherein
the data is a maintenance result of the device or a quality inspection result of a product produced by the device.

9. The state monitoring device according to Claim 1, wherein
the motor control internal value generator is a unit which is included in the motor controller and which outputs the state variable via the motor controller.

10. A device system including a device driven by a motor, comprising:
an actuator operated by a drive force of the motor;
a motor controller for controlling the motor;
the state monitoring device as set out in any of claims 1 **-** 9; and
an information transfer unit for displaying information on the state of the device system estimated by the state estimator.

11. The device system according to Claim 10, wherein
the actuator is a machining tool of a machine tool,
the state quantity acquirer is configured to acquire a quality inspection result of a product produced by the machine tool; and
the state estimator update unit is configured to update the state estimator on the basis of the quality inspection result acquired by the state quantity acquirer.

12. The device system according to Claim 10, wherein
the actuator is wheels of a vehicle,
the state quantity acquirer acquires a maintenance result of the vehicle; and
the state estimator update unit updates the state estimator on the basis of the maintenance result acquired by the state quantity acquirer.

## Patentansprüche

1. Zustandsüberwachungsvorrichtung für ein Vorrichtungssystem, umfassend eine Vorrichtung, die durch einen Motor angetrieben wird, welcher durch eine Motorsteuerung gesteuert wird, umfassend:
einen Interner-Motorsteuerungswert-Generator (16), der dazu ausgelegt ist, einen internen Motorsteuerungswert als eine Zustandsvariable der Motorsteuerung basierend auf zumindest zwei Sensorsignalen oder auf einem Sensorsignal in Kombination mit einem Befehlswert zu erzeugen;
**gekennzeichnet durch**:
einen Zustandsschätzer (15, 309, 409), der dazu ausgelegt ist, einen Zustand des Vorrichtungssystems basierend auf dem durch den Interner-Motorsteuerungswert-Generator erzeugten internen Motorsteuerungswert und basierend auf einem Statistikmodell zu schätzen;
eine Zustandsgrößenerfassungseinheit (20), die dazu ausgelegt ist, VergangenheitsDaten über den Zustand des Vorrichtungssystems zu erfassen; und
eine Zustandsschätzer-Aktualisierungseinheit (21), die für Folgendes ausgelegt ist:
Empfangen der Vergangenheitsdaten über den Zustand des Vorrichtungssystems von der Zustandsgrößenerfassungseinheit,
Empfangen des erzeugten internen Motorsteuerungswerts, der an dem Interner-Motorsteuerungswert-Generator erzeugt wurde, und
Aktualisieren des Statistikmodells basierend auf den Daten von der Zustandsgrößenerfassungseinheit und dem erzeugten internen Motorsteuerungswert.

2. Zustandsüberwachungsvorrichtung nach Anspruch 1, wobei
der Zustand des Vorrichtungssystems ein Zustand der Vorrichtung oder ein Zustand eines von der Vorrichtung erzeugten Produkts ist.

3. Zustandsüberwachungsvorrichtung nach Anspruch 2, wobei der interne Motorsteuerungswert eines aus einem Positionsrückmeldungswert, einem Geschwindigkeitsrückmeldungswert, einem d-Achsen-Strom-Befehl, einem q-Achsen-Strom-Befehl, einem d-Achsen-Strom-Rückmeldungswert, einem q-Achsen-Strom-Rückmeldungswert, einem d-Achsen-Spannungsbefehl, einem q-Achsen-Spannungsbefehl, einer Ausgabe eines Komparators, einer Ausgabe eines Integrators und einer Ausgabe eines Differenzierers umfasst.

4. Zustandsüberwachungsvorrichtung nach Anspruch 3, wobei
die Sensorinformationen eines aus dem Positionsrückmeldungswert, dem Geschwindigkeitsrückmeldungswert, dem Motorspannungsrückmeldungswert und dem Motorstromrückmeldungswert umfassen.

5. Zustandsüberwachungsvorrichtung nach Anspruch 1, wobei
die Sensorinformationen entweder durch:
einen Sensor, der an einem Eingangsteil oder Ausgangsteil der Motorsteuerung bereitgestellt ist, oder
einen Sensor, der unabhängig von der Motorsteuerung angeordnet ist,
erfasst werden.

6. Zustandsüberwachungsvorrichtung nach Anspruch 1, ferner umfassend eine Informationsübertragungseinheit zum Anzeigen von Informationen über den durch den Zustandsschätzer geschätzten Zustand des Vorrichtungssystems.

7. Zustandsüberwachungsvorrichtung nach Anspruch 1, ferner umfassend eine Motorsteuerungs-Aktualisierungseinheit zum Aktualisieren der Motorsteuerung gemäß dem durch den Zustandsschätzer geschätzten Zustand des Vorrichtungssystems.

8. Zustandsüberwachungsvorrichtung nach Anspruch 1, wobei
die Daten ein Wartungsergebnis der Vorrichtung oder ein Qualitätsüberprüfungsergebnis eines durch die Vorrichtung erzeugten Produkts sind.

9. Zustandsüberwachungsvorrichtung nach Anspruch 1, wobei
der Interner-Motorsteuerungswert-Generator eine Einheit ist, welche in der Motorsteuerung umfasst ist und die Zustandsvariable über die Motorsteuerung ausgibt.

10. Vorrichtungssystem, umfassend eine durch einen Motor angetriebene Vorrichtung, umfassend:
einen durch eine Antriebskraft des Motors betriebenen Aktuator;
eine Motorsteuerung zum Steuern des Motors;
eine Zustandsüberwachungsvorrichtung nach einem der Ansprüche 1 bis 9; und
eine Informationsübertragungseinheit zum Anzeigen von Informationen über den durch den Zustandsschätzer geschätzten Zustand des Vorrichtungssystems.

11. Vorrichtungssystem nach Anspruch 10, wobei
der Aktuator ein Bearbeitungswerkzeug eines Maschinenwerkzeugs ist,
wobei die Zustandsgrößenerfassungseinheit dazu ausgelegt ist, ein Qualitätsüberprüfungsergebnis eines durch das Maschinenwerkzeug erzeugten Produkts zu erfassen; und
die Zustandsschätzer-Aktualisierungseinheit dazu ausgelegt ist, den Zustandsschätzer basierend auf dem durch die Zustandsgrößenerfassungseinheit erfassten Qualitätsüberprüfungsergebnis zu aktualisieren.

12. Vorrichtung nach Anspruch 10, wobei
der Aktuator Räder eines Fahrzeugs sind,
die Zustandsgrößenerfassungseinheit ein Wartungsergebnis der Vorrichtung erfasst; und
die Zustandsschätzer-Aktualisierungseinheit den Zustandsschätzer basierend auf dem durch die Zustandsgrößenerfassungseinheit erfassten Wartungsergebnis aktualisiert.

## Revendications

1. Dispositif de surveillance d'état pour un système de dispositif incluant un dispositif entraîné par un moteur commandé par un dispositif de commande de moteur, comprenant :
un générateur de valeur interne de commande de moteur (16) configuré pour générer une valeur interne de commande de moteur en tant que variable d'état du dispositif de commande de moteur sur la base d'au moins deux signaux de capteur ou sur un signal de capteur en combinaison avec une valeur de commande ;
**caractérisé par**
un dispositif d'estimation d'état (15, 309, 409) configuré pour estimer un état du système de dispositif sur la base de la valeur interne de commande de moteur générée par le générateur de valeur interne de commande de moteur et sur la base d'un modèle statistique ;
un dispositif d'acquisition de quantité d'état (20), configuré pour acquérir des données passées sur l'état du système de dispositif ; et
une unité de mise à jour d'estimation d'état (21), configurée pour :
recevoir, du dispositif d'acquisition de quantité d'état, les données passées sur l'état du système de dispositif,
recevoir la valeur interne de commande de moteur générée au niveau du générateur de valeur interne de commande de moteur, et
mettre à jour le modèle statistique sur la base des données provenant du dispositif d'acquisition de quantité d'état et de la valeur interne de commande de moteur générée.

2. Dispositif de surveillance d'état selon la revendication 1, dans lequel
l'état du système de dispositif est un état du dispositif ou un état d'un produit qui a été produit par le dispositif.

3. Dispositif de surveillance d'état selon la revendication 2, dans lequel
la valeur interne de commande de moteur inclut une quelconque parmi une valeur de rétroaction de position, une valeur de rétroaction de vitesse, une commande de courant d'axe d, une commande de courant d'axe q, une valeur de rétroaction de courant d'axe d, une valeur de rétroaction de courant d'axe q, une commande de tension d'axe d, une commande de tension d'axe q, sortie d'un comparateur, une sortie d'un intégrateur et sortie d'un dispositif de différentiation.

4. Dispositif de surveillance d'état selon la revendication 3, dans lequel
les informations de capteur incluent l'une quelconque de la valeur de rétroaction de position, de la valeur de rétroaction de vitesse, de la valeur de rétroaction de tension de moteur et de la valeur de rétroaction de courant de moteur.

5. Dispositif de surveillance d'état selon la revendication 1, dans lequel
les informations de capteur sont acquises par :
un capteur disposé au niveau d'une partie d'entrée ou d'une partie de sortie du dispositif de commande de moteur ou
un capteur disposé indépendamment du dispositif de commande de moteur.

6. Dispositif de surveillance d'état selon la revendication 1, comprenant en outre une unité de transfert d'informations pour afficher des informations sur l'état du système de dispositif estimé par le dispositif d'estimation d'état.

7. Dispositif de surveillance d'état selon la revendication 1, comprenant en outre une unité de mise à jour de dispositif de commande de moteur pour mettre à jour le dispositif de commande de moteur en fonction de l'état du système de dispositif estimé par le dispositif d'estimation d'état.

8. Dispositif de surveillance d'état selon la revendication 1, dans lequel
les données sont un résultat de maintenance du dispositif ou un résultat d'inspection de qualité d'un produit qui a été produit par le dispositif.

9. Dispositif de surveillance d'état selon la revendication 1, dans lequel
le générateur de valeur interne de commande de moteur est une unité qui est incluse dans le dispositif de commande de moteur et qui délivre en sortie la variable d'état via le dispositif de commande de moteur.

10. Système de dispositif incluant un dispositif entraîné par un moteur, comprenant :
un actionneur actionné par une force d'entraînement du moteur ;
un dispositif de commande de moteur pour commander le moteur ;
un dispositif de surveillance d'état selon l'une quelconque des revendications 1 à 9, et
une unité de transfert d'informations pour afficher des informations sur l'état du système de dispositif estimé par le dispositif d'estimation d'état.

11. Système de dispositif selon la revendication 10, dans lequel
l'actionneur est un outil d'usinage d'une machine-outil,
le dispositif d'acquisition de quantité d'état est configuré pour acquérir un résultat d'inspection de qualité d'un produit qui a été produit par la machine-outil ; et
l'unité de mise à jour de dispositif d'estimation d'état est configurée pour mettre à jour le dispositif d'estimation d'état sur la base du résultat d'inspection de qualité acquis par le dispositif d'acquisition de quantité d'état.

12. Système de dispositif selon la revendication 10, dans lequel
l'actionneur est les roues d'un véhicule,
le dispositif d'acquisition de quantité d'état acquiert un résultat de maintenance du véhicule ; et
l'unité de mise à jour du dispositif d'estimation d'état met à jour le dispositif d'estimation d'état sur la base du résultat de maintenance acquis par le dispositif d'acquisition de quantité d'état.
